# EUROPÄISCHE PATENTSCHRIFT

(11) **EP 2 714 551 B1**
(45) Veröffentlichungstag und Bekanntmachung des Hinweises auf die Patenterteilung: **22.03.2017**
(21) Anmeldenummer: 12740867.2
(22) Anmeldetag: 31.05.2012
(51) Int. Cl.: B65G 1/04, B65G 1/137, A47B 61/06, A47F 7/24, B65D 85/18

(54) **VERFAHREN ZUM TRANSPORT VON LIEGEWAREN UND HÄNGEWAREN UND ENTSPRECHENDES AUTOMATISIERTES LAGERSYSTEM**
METHOD FOR TRANSPORTING LAYING AND HANGING ARTICLES AND CORRESPONDING AUTOMATED STORAGE SYSTEM
PROCÉDÉ DE TRANSPORT D'ARTICLES GISANTS ET SUSPENDUS ET SYSTÈME AUTOMATIQUE DE STOCKAGE CORRESPONDANT

(30) Priorität: 31.05.2011 AT 8022011
(43) Veröffentlichungstag der Anmeldung: 09.04.2014
(73) Patentinhaber: TGW Logistics Group GmbH, 4600 Wels (AT)
(72) Erfinder: WINKLER, Markus, 4814 Altmünster (AT)
(74) Vertreter: Burger, Hannes
(86) Internationale Anmeldenummer: PCT/AT2012/050076
(87) Internationale Veröffentlichungsnummer: WO 2012/162715

(56) Entgegenhaltungen:
- EP-A1- 2 177 418
- EP-A1- 2 316 742
- WO-A1-2009/143548
- DE-A1- 3 927 203
- DE-A1- 10 200 077
- DE-U1- 29 905 509
- GB-A- 2 440 429
- US-A- 3 620 377
- US-A1- 2001 051 085
- US-A1- 2009 065 461

## Beschreibung

Die Erfindung betrifft ein Verfahren zum Transport von Liegewaren und Hängewaren sowie ein automatisiertes Lagersystem zum Lagern und/oder Kommissionieren von Liegewaren und Hängewaren.

Es sind bereits die verschiedensten Kommissioniersysteme und Kommissionierverfahren mit unterschiedlichen Lagersystemen aus dem Stand der Technik bekannt geworden.

Dabei unterscheidet man zwei grundlegend unterschiedliche Prinzipien, nach denen kommissioniert werden kann.

Bei einem ersten Prinzip wird die zu kommissionierende Ware von einer Person bzw. einem Kommissionierer (manuell) aus einem Lager geholt, um in einen Behälter oder auf eine Palette kommissioniert zu werden, die der Kommissionierer (permanent) mit sich führt. Bei diesem "Mann zu Ware"-Prinzip wird dieser Vorgang so oft wiederholt, bis alle Artikel eines Kommissionierauftrags abgearbeitet sind. Unter einem Kommissionierauftrag versteht man eine Zusammenstellung von verschiedenen Artikeln in unterschiedlichen Anzahlen, die z.B. eine Bestellung eines Kunden repräsentiert. Ferner können bei dem Prinzip "Mann zu Ware" sogenannte Kommissionierfahrzeuge eingesetzt werden, die z.B. in einem Regallager horizontal zwischen den Regalen, d.h. in Regalgassen, und in vertikaler Richtung verfahrbar sind, um den Kommissionierer, der einem entsprechenden Kommissionierstand des Kommissionierfahrzeugs sitzt oder steht, zu einem entsprechenden Regalplatz zu fahren, wo der benötigte und zu kommissionierende Artikel gelagert ist.

Bei einer anderen Ausgestaltung des Prinzips "Mann zu Ware" läuft der Kommissionierer die Regale ab und kommissioniert Artikel aus dem Regal z.B. in einen Behälter, den er selbst trägt, oder auf eine Palette, die er mit Hilfe eines Palettentransportgeräts (z.B. einer Ameise) hinter sich herzieht.

Nachteilig bei diesem Kommissionierprinzip "Mann zu Ware" ist, dass die Kommissionierer weite Wege zurücklegen müssen, was sich in einem hohen Zeitaufwand zum Abarbeiten eines Kommissionierauftrags, und somit in einem geringen Durchsatz, widerspiegelt. Falls der Kommissionierer das Regal ablaufen muss, ist dies aus ergonomischen Gesichtspunkten ungünstig. Falls der Kommissionierer den Behälter, in dem kommissioniert wird, selbst trägt oder auch auf einer Rollenbahn mitschiebt, ist dies ebenfalls ergonomisch ungünstig und es können lediglich wenige Artikel kommissioniert werden, d.h. ein Kommissionierauftrag muss womöglich in mehrere Unteraufträge aufgeteilt werden. Dies wiederum erhöht einen Steuerungsaufwand für die Abarbeitung des Kommissionierauftrags. Die Kommissionierung erfolgt artikelorientiert.

Bei einem anderen Kommissionierprinzip wird die zu kommissionierende Ware zum Kommissionierer transportiert. In diesem Fall spricht man von dem Prinzip "Ware zum Mann". Die Kommissionierung erfolgt auftragsorientiert. Die Ware wird gemäß einem abzuarbeitenden Auftrag zum Mann transportiert.

Beim Prinzip "Ware zum Mann" sind die zu kommissionierenden Artikel vorzugsweise in Behältern, auf Tablaren, auf Paletten oder ähnlichen Ladehilfsmitteln in einem Lager bevorratet. Solche Behälter werden auch Lagerbehälter genannt. Die Kommissionierung erfolgt örtlich vom Lager getrennt an sog. Kommissionierplätzen. Die in den Lagerbehältern gelagerten Artikel werden über eine Fördertechnik, wie z.B. Förderfahrzeuge, motorbetriebene Rollenbahnen, Gurtbänder, Hängeförderer, etc. zum Kommissionierplatz transportiert. Am Kommissionierplatz steht oder sitzt der Kommissionierer und wartet auf die Lagerbehälter, um die zu kommissionierenden Artikel zu entnehmen und die entnommenen Artikel in z.B. Auftragsbehälter zu geben. Ein fertig kommissionierter Auftragsbehälter kann dann mit einer weiteren Fördertechnik entweder zu einer örtlich entfernt gelegenen Packstation und anschließend zu einer Versandstation oder direkt zu einer Versandstation transportiert. Von der Versandstation aus werden die Auftragsbehälter dann z.B. per Pkw oder Lkw zum jeweiligen Auftraggeber, d.h. zu dem Kunden, transportiert.

Das Prinzip "Ware zum Mann" zeichnet sich insbesondere durch seine ergonomischen Gesichtspunkte aus. Ein Kommissionierer muss sich nur wenig bewegen, um einen Kommissionierauftrag abarbeiten zu können. Mittels der eingesetzten Fördertechnik kann ein hoher Durchsatz erzielt werden. Lager können räumlich enger gebaut werden, da der Kommissionierer nicht mehr durch die einzelnen Regalgassen fahren oder laufen muss. Ein- und Auslagerungsvorgänge können automatisiert werden.

Aus der GB 2 440 429 A, EP 2 177 418 A1, EP 2 316 742 A1, US 2009/065461 A1, US 3 620 377 A, DE 299 05 509 U1 ist ein Ladehilfsmittel zur Aufnahme von Hängeware und/oder Liegewaren bekannt. Das Ladehilfsmittel weist einen Boden und ein am Boden fixiertes Traggestell auf. Der Boden ist auf einer oberen Seite mit einem Aufnahmeplatz zum Ablegen einer Liegeware und auf einer unteren Seite mit Laufrollen oder einer Transportfläche versehen. Das Traggestell umfasst einen vom Boden distanziert angeordneten Tragbalken zum Aufhängen einer Hängeware.

Die DE 39 27 203 A1 offenbart ein automatisiertes Lagersystem zum Lagern und/oder Kommissionieren von Liegewaren und Hängewaren, umfassend ein Palettenlager für Liegeware/Hängeware und ein Hängebahnlager für Hängeware. Im Palettenlager sind eine Vielzahl von in einer Regalgasse verfahrbaren Förderfahrzeugen mit jeweils einer Lastaufnahmevorrichtung und Paletten (Ladehilfsmitteln) vorgesehen, wobei die Lastaufnahmevorrichtung zur Einlagerung der Paletten in das Regal bzw. zum Auslagern der Paletten aus dem Regal ausgebildet ist. Die Liegeware ist auf Paletten gestapelt und die Hängeware über ein auf Paletten angeordnetes Traggestell aufgehängt. Es ist jedoch nicht vorgesehen, dass auf einer Palette sowohl Liegeware als auch Hängeware aufgenommen werden. Im Hängebahnlager sind eine Vielzahl von entlang von Förderstrecken bewegbaren Trolleys vorgesehen, welche die Hängeware (Textilware) auf Hängebügeln transportieren.

Andere Ausbildungen von Lagersystemen zum Lagern und Kommissionieren von Ladehilfsmitteln sind aus der WO 2009/143548 A1 und DE 102 00 077 A1 bekannt. Aus der US 2001/0051085 A1 ist es bekannt, dass mit einem rechnergesteuerten Regalbediengerät auf einer Lastaufnahmevorrichtung ausschließlich Hängeware transportiert wird.

Aus der DE 38 34 576 A1 ist ein Hochleistungshängeförderer für auf Kleiderbügeln hängende Kleidungsstücke und dergleichen bekannt geworden, der einen Kreisförderer mit kontinuierlich umlaufenden Transportgreifern umfasst, die einen steuerbaren Hakenfinger besitzen. An einer Aufgabestation werden die Kleiderbügel vereinzelt und an die Transportgreifer übergeben. Zu diesem Zweck ist an der Aufgabestation ein Übergabeteil vorgesehen, das quer zur Förderrichtung verfahrbar und mit einer Aufnahme zum Einhängen eines Kleiderbügelhakens, mit einer Klammer zum gesteuerten Festklemmen des Kleiderbügelhakens und mit Schwenkarmen ausgerüstet ist, die sich von oben auf den Kleiderbügel absenken lassen und so den Bügel und die darauf hängenden Kleidungsstücke während des Übergabevorgangs fixiert. Dabei können ausschließlich nur hängende Waren in diesem Hochleistungshängeförderer aufgehängt und transportiert werden.

Aus der DE 39 02 712 A1 ist ein anderes Verfahren und eine Vorrichtung zum Zusammenstellen von Gruppen von Bekleidungsstücken unterschiedlicher Art und/oder Anzahl auf jeweils unterschiedlichen Zielen angeordneten Fördermitteln bekannt geworden. Bei dem bekannten Verfahren werden ankommende Bekleidungsstücke nach Art und Größe sortiert und sofort auf die jedem Kunden zugeordneten Fördermittel übergeben. Bei diesen Fördermitteln handelt es sich ebenfalls um Hängeförderer. Alle den verschiedenen Kunden zugeordneten Fördermittel laufen auf einem Förderkreis um und werden nacheinander beladen, wobei zunächst alle Bekleidungsstücke einer einzigen Art und einer einzigen Größe auf alle Abnehmer verteilt werden bevor die nächste Art und Größe der Bekleidungsstücke erfolgt. Ist auf einem der Fördermittel eine komplette Liefergruppe zusammengestellt, so wird diese ausgeschleust. Auch hier können ausschließlich Hängewären für die Bereitstellung und Kommissionierung transportiert werden.

Ähnliche Anlagen zum Transportieren und Kommissionieren von Hängewaren sind aus der EP 0 516 970 B1 bzw. der US 2004/0144843 A1 bekannt geworden. Auch bei diesen bekannten Systemen können ausschließlich Hängewaren transportiert und kommissioniert werden.

Nachteilig bei all diesen bekannten Anlagen und Vorrichtungen ist, dass für Liegewaren und Hängewaren jeweils ein eigenes Lager- und Fördersystem notwendig ist, wodurch ein höherer logistischer und vor allem platzmäßiger Bedarf notwendig ist.

Die DE 103 54 419 A1 offenbart eine Hängefördereinrichtung zum Transportieren von Kleidungsstücken sowohl von Hängeware und Liegeware, mit einer Mehrzahl von Ladehilfsmitteln, welche mittels eines Hakens an einer Führungsschiene angehängt sind und an dieser entlang einer Förderstrecke transportierbar sind. Zumindest ein Ladehilfsmittel umfasst eine Vorderwand, eine Rückwand, Seitenwände und einen Boden, welche gemeinsam ein Taschenfach zur Aufnahme von Kleidungsstücken umgrenzen. Die Vorderwand und Rückwand sind relativ zueinander verstellbar. Ebenso ist der Boden mit der Vorderwand und Rückwand gelenkig verbunden.

Ein Ladehilfsmittel für eine Hängefördereinrichtung ist auch aus der DE 199 25 912 A1 bekannt, welche mittels eines Hakens an einer Führungsschiene angehängt und an dieser entlang einer Förderstrecke transportierbar ist. Das Ladehilfsmittel umfasst eine Rückwand, Seitenwände und Tragböden. Auf den Tragböden können Kleidungsstücke abgelegt werden.

Der vorliegenden Erfindung liegt die Aufgabe zugrunde, ein Verfahren zum Transport von Liegewaren und Hängewaren bzw. ein automatisiertes Lagersystem zum Lagern und/oder Kommissionieren von Liegewaren und Hängewaren zu schaffen, mit welchem die Manipulation von Liegewaren und Hängewaren vereinfacht wird.

Die Aufgabe der Erfindung wird dadurch gelöst, dass das Ladehilfsmittel einen Warenträger mit einem Boden umfasst, welcher auf seiner oberen Seite zumindest einen Aufnahmeplatz ausbildet, auf welchem zumindest eine Liegeware abgelegt werden kann, und ein Traggestell umfasst, auf welchem zumindest eine Hängeware aufgehängt werden kann, wobei zumindest eine Liegeware oder zumindest eine Hängeware oder zumindest eine Liegeware und zumindest eine Hängeware auf das Ladehilfsmittel geladen und gegebenenfalls gemeinsam mit dem Ladehilfsmittel auf einer zufördernden Fördertechnik zu einem Regallager transportiert werden, wobei das Ladehilfsmittel mittels einem Förderfahrzeug von der zufördernden Fördertechnik übernommen und in ein Regalfach des Regallagers eingelagert (gepuffert) und gemäß einem Auftrag, insbesondere Kommissionierauftrag, mittels einem Förderfahrzeug aus einem Regalfach des Regallagers ausgelagert und auf eine abfördernde Fördertechnik übergeben sowie von der abfördernden Fördertechnik von einem Regallager abtransportiert wird.

Das Ladehilfsmittel wird von der abfördernden Fördertechnik beispielweise zu einem Kommissionierplatz gefördert, wo ein Kommissionierauftrag abgearbeitet wird. Dabei kann sich in dem zu transportierenden Ladehilfsmittel entweder nur Liegeware oder Hängeware, oder aber eine Liegeware als auch eine Hängeware befinden. Das Ladehilfsmittel liegt während dem Transportvorgang mit seinem Boden bzw. seiner Transportfläche auf einer Förderfläche der Fördertechniken oder dem Förderfahrzeug und während dem Lagervorgang mit seinem Boden bzw. seiner Transportfläche auf einer Lagerfläche des Regalfaches auf.

Das Traggestell kann über Steckaufnahmen oder Verbindungselemente, wie Schrauben und dgl., mit dem Boden verbunden sein. Anderenfalls kann das Traggestell mit dem Tragbalken, zumindest einem Seitenständer und einer Stellplatte eine selbstragende Baueinheit geschaffen werden, welche an der oberen Seite des Warenträgers abgestellt wird und über Reibschluss und/oder Formschluss mit dem Boden verbunden wird. Welche Art der Fixierung gewählt wird, kann abhängig von unterschiedlichen Einsatzgebieten variieren. Wesentlich ist, dass keine Gelenkverbindung zwischen dem Warenträger und dem Traggestell existiert, sondern eine starre Verbindung. So ist es auch möglich, dass die Verbindung zwischen dem Warenträger und dem Traggestell lösbar oder unlösbar ist.

Umfasst das Traggestell nach einer Ausführung eine Stellplatte, so bilden der Boden und die Stellplatte den Warenträger. In diesem Fall bildet die Stellplatte des Warenträgers auf einer oberen Seite den zumindest einen Aufnahmeplatz für eine Liegeware und der Boden des Warenträgers auf einer unteren Seite die Transportfläche aus.

Die Transportfläche ist eine im Wesentlichen ebene Auflagefläche, mittels welcher das Ladehilfsmittel während seinem Transport auf einer Förderfläche einer automatisierten Fördertechnik, beispielweise Rollenförderer, Gurtförderer und dgl., oder auf einer Förderfläche eines Förderfahrzeugs aufliegt. Wird das Ladehilfsmittel in einem Regallager zwischengelagert, bevor es für einen Auftrag wieder aus dem Regallager mittels dem Förderfahrzeug ausgelagert wird, kann das Ladehilfsmittel mit der Transportfläche bzw. der ebenen Auflagefläche auf einer Lagerfläche eines Regalfachs aufliegen. Die Transportfläche kann über den Grundriss des Bodens vollflächig oder nur abschnittsweise beispielweise an einer unten am Boden randseitig umlaufenden Rippe ausgebildet sein. Wesentlich ist, dass der Umriss der (rechteckförmigen) Transportfläche größer bemessen ist als eine Aufnahmefläche am Aufnahmeplatz, sodass auch während dem Transport des Ladehilfsmittels auf der Förderfläche und den damit verbundenen Verzögerungs- und Beschleunigungsrampen das Ladehilfsmittel "schwingungsfrei" transportiert werden kann.

Weitere Vorteile liegen auch darin, dass mit einem (universell eingesetzten) einzigen Typ Ladehilfsmittel in einem automatisierten Lagersystem das Auslangen gefunden werden kann. Das Ladehilfsmittel kann gleichzeitig sowohl Hängeware als auch Liegeware bevorraten. Bei Bedarf kann die Hängeware und Liegeware wieder aus dem Ladehilfsmittel entnommen werden. Man bedient sich sowohl für die Liegeware als auch für die Hängeware einem einheitlichen Lagersystem. Es ist also nicht mehr notwendig, dass zusätzlich zu dem Lager- und Fördersystem für Liegewaren auch eine Lager- und Fördersystem für Hängewaren vorgesehen wird.

So kann auf ein bestens bewährtes Lagersystem aufgebaut werden, bei welchem mit einem hohen Automatisierungsgrad ein rascher Zugriff für die Kommissionierung erfolgen und das Förderprinzip "Ware zu Mann" umgesetzt werden kann.

Damit können lange Wegstrecken für den Kommissionierer während einem Kommissioniervorgang vermieden werden, da dieser nahezu ortsfest von den angelieferten Ladehilfsmitteln sowohl Hängeware als auch Liegeware gleichzeitig entnehmen kann. Damit werden unterschiedliche Lagersysteme für die Hängeware und die Liegeware vermieden.

Weiters ist es vorteilhaft, wenn das Traggestell zumindest einen vom Boden aufragenden Seitenständer umfasst und der Seitenständer mit dem Tragbalken verbunden ist. So wird die Möglichkeit geschaffen, unabhängig vom Warenträger die Anordnung des Tragbalkens vorzusehen, um so die Hängeware im Ladehilfsmittel aufnehmen zu können. Weiters wird dadurch auch ein gewisser Schutz der aufgehängten Hängeware während des Transports erzielt.

Eine andere Ausführungsform zeichnet sich dadurch aus, dass der Seitenständer in Querrichtung bezüglich der Längserstreckung des Tragbalkens voneinander distanziert angeordnete Rahmenteile umfasst, welche zumindest auf der vom Boden abgewendeten Seite miteinander verbunden sind. So wird eine höhere Eigensteifigkeit des Seitenständers erzielt und darüber hinaus auch noch eine stabile Lagerung für den Tragbalken geschaffen.

Eine weitere mögliche Ausführungsform hat die Merkmale, dass das Traggestell zwei in Richtung der Längserstreckung des Tragbalkens voneinander distanziert angeordnete Seitenständer umfasst und der Tragbalken mit beiden Seitenständern gekuppelt ist. So kann eine stabile Ausbildung des Traggestells geschaffen werden, wobei auch noch eine feste Abstützung des Tragbalkens an den Seitenständern gewährleistet ist.

Eine weitere Ausbildung sieht vor, dass zwischen den in Längserstreckung des Tragbalkens voneinander distanziert angeordneten Rahmenteilen des Seitenständers randlich zumindest ein sich dazwischen erstreckendes Stützelement angeordnet ist. Durch das Vorsehen des Stützelements kann ein seitliches Hinausschwenken der Hängeware während des Transports verhindert werden. Darüber hinaus kann auch die Kippgefahr des Ladehilfsmittels herabgesetzt werden, da der Schwerpunkt der Hängeware innerhalb der Aufstandsfläche des Warenträgers verbleibt.

Eine andere Ausführungsform zeichnet sich dadurch aus, dass das Stützelement schwenkbar an einem der Rahmenteile gelagert ist. Damit kann über die Schutzwirkung des Stützelements hinaus ein einfacher Zugang in den vom Traggestell umgrenzten Innenraum geschaffen werden. So wird die Bedienbarkeit während des Kommissioniervorgangs verbessert.

Eine weitere mögliche Ausführungsform ist dadurch gekennzeichnet, dass die Seitenständer des Traggestells im Bereich des, den Boden bildenden Warenträgers miteinander verbunden sind. Damit kann eine stabile Einheit des Traggestells geschaffen werden, wobei zusätzlich auch noch der Schwerpunkt des leeren Traggestells in Richtung zum Boden verlagert werden kann. Damit wird die Kippgefahr des Ladehilfsmittels herabgesetzt.

Weiters ist es vorteilhaft, wenn der Tragbalken an zumindest einem der Seitenständer des Traggestells in senkrechter Richtung bezüglich des Bodens verstellbar gehaltert ist. Damit kann eine individuelle Anpassung an die am Tragbalken aufzuhängende Hängeware in Bezug auf den Warenträger geschaffen werden.

Eine andere Ausführungsform zeichnet sich dadurch aus, dass das Traggestell im Bereich seiner äußeren Umgrenzung zumindest bereichsweise von einem Abdeckelement abgedeckt ist. Damit wird ein Schutz der am Tragbalken aufgehängten Hängeware erzielt. Dies erfolgt insbesondere dann, wenn das Abdeckelement im Bereich der Seitenständer vorgesehen ist. Damit wird während der Transportbewegung ein Hinausziehen der Hängeware verhindert. Weiters können aber auch bei einer nahezu vollständigen Umhüllung, sensible Waren vor Verschmutzungen sowie Beschädigungen geschützt werden.

Weiters kann es vorteilhaft sein, wenn das Abdeckelement im Bereich des, den Boden bildenden Warenträgers angeordnet ist und zumindest eine Seitenwand bildet. Damit kann im Bodenbereich des Ladehilfsmittels eine sicherere Aufbewahrung der Liegeware erzielt werden, ohne dass diese bei den durchzuführenden Transportbewegungen verloren geht.

Eine weitere mögliche Ausführungsform ist dadurch gekennzeichnet, dass an dem, den Boden bildenden Warenträger zumindest eine davon aufragende Seitenwand angeordnet ist und diese einen Behälter ausbildet. Dadurch wird im Bereich des Warenträgers ein stabiler Zusammenhalt zwischen diesem und der oder den Seitenwänden erzielt. So können auch handelsübliche Behälter eingesetzt werden.

Eine weitere Ausbildung sieht vor, dass das Traggestell mit dem, den Boden bildenden Warenträger verbunden ist. Dadurch wird eine zusammengehörige Einheit geschaffen, welche einen störungsfreien Einsatz gewährleistet.

Eine andere Ausführungsform zeichnet sich dadurch aus, dass am Traggestell an der vom Tragbalken abgewendeten Seite der, den Boden bildende Warenträger als integraler Bestandteil gegebenenfalls mit zumindest einer Seitenwand ausgebildet ist. Durch diese Ausbildung kann auf eine eigene Anfertigung des Behälters verzichtet werden, da dieser direkt als Teil bzw. Bestandteil des Traggestells ausgebildet ist.

Eine weitere mögliche Ausführungsform ist dadurch gekennzeichnet, dass an einem stirnseitigen Ende der Regalgasse und/oder an einem seitlichen Ende des Regallagers zumindest ein Kommissionierplatz angeordnet ist. Dadurch kann das Förderprinzip "Ware zum Mann" eingesetzt werden und so ein hoher Automatisierungsgrad und vor allem ein rascher Zugriff auf die zu kommissionierende Ware geschaffen werden, ohne dass lange Bereitstellungswege des Kommissionierers zurück gelegt werden müssen.

Weiters ist es vorteilhaft, wenn der Kommissionierplatz in Draufsicht U-förmig zueinander ausgerichtete Förderstrecken umfasst, wobei Schenkel des U-förmigen Kommissionierplatzes parallel bezüglich der Regalgasse ausgerichtet und auf der von der Regalgasse abgewendeten Seite mit einem die Förderstrecke bildenden Querförderer verbunden sind. Damit kann im Bereich des Kommissionierplatzes ein geordneter Zu- sowie Abtransport der einzelnen Ladehilfsmittel erfolgen. Die Kommissionierperson kann dann von den jeweiligen bereitgestellten Ladehilfsmitteln die zu kommissionierenden Waren entnehmen.

Zum besseren Verständnis der Erfindung wird diese anhand der nachfolgenden Figuren näher erläutert.

Es zeigen jeweils in stark schematisch vereinfachter Darstellung:
- Fig. 1: ein Lagersystem mit mehreren Regallagern und in Querrichtung eingelagerten Ladehilfsmitteln, in Draufsicht;
- Fig. 2: einen Teilabschnitt eines weiteren Regallagers eines Lagersystems mit in Längsrichtung eingelagerten Ladehilfsmitteln, in Ansicht;
- Fig. 3: ein Ladehilfsmittel in schaubildlich vereinfachter Darstellung;
- Fig. 4: eine Lastaufnahmevorrichtung eines Förderfahrzeuges mit einem Ladehilfsmittel, in Ansicht;
- Fig. 5: eine andere mögliche Ausbildung eines Ladehilfsmittels in schaubildlich vereinfachter Darstellung;
- Fig. 6: eine weitere mögliche Ausbildung eines Kommissionierplatzes in einem Lagersystem, in Ansicht geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

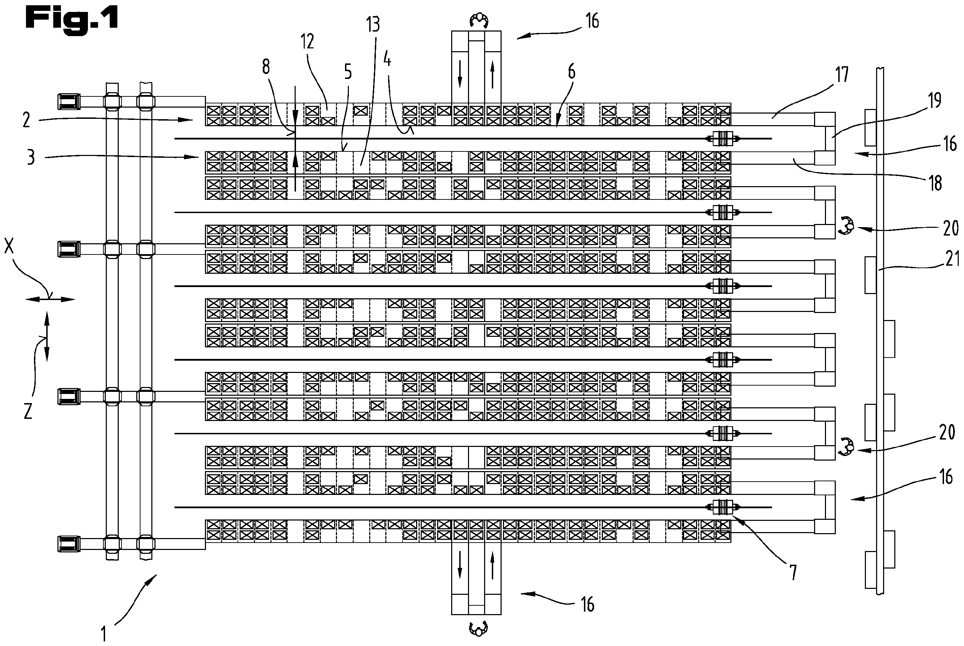

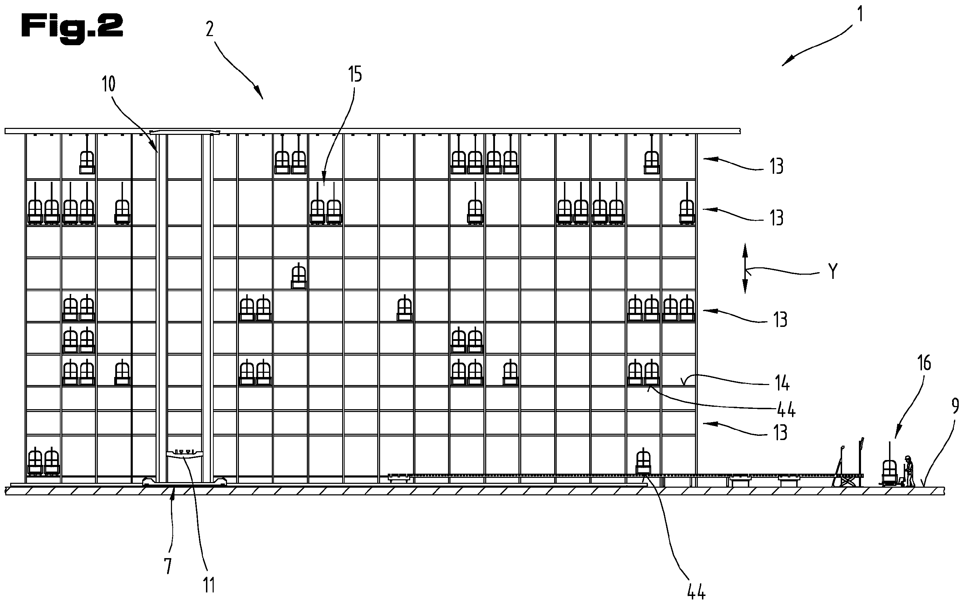

In den Fig. 1 und 2 ist stark vereinfacht ein Lagersystem 1 gezeigt, das bevorzugt mehrere baulich übereinstimmende und sich spiegelbildlich gegenüberstehende Regallager 2, 3 umfasst. Aus Wirtschaftlichkeitsgründen sind mehrere Regallager 2, 3 vorgesehen, wobei es unabhängig davon aber auch möglich ist, nur eines der Regallager 2, 3 vorzusehen. Bei diesem Lagersystem 1 handelt es sich bevorzugt um einen Lagertyp, welcher als Behälterlager bezeichnet werden kann und zumeist als Hochregallager ausgebildet ist.

Durch einen Abstand zwischen einander zugewendeten Ein- bzw. Auslagerungsseiten 4, 5 der beiden Regallager 2, 3 ist eine Regalgasse 6 ausgebildet. In dieser Regalgasse 6 sind in bekannter Weise je nach gewähltem Förderfahrzeug 7 Führungsanordnungen vorgesehen. Das Förderfahrzeug 7 kann beispielsweise durch ein Regalbediengerät, ein Transportshuttle usw. gebildet sein und umfasst seinerseits zumindest ein Lastaufnahmemittel bzw. eine Lastaufnahmevorrichtung. Weiters ist es möglich, das Förderfahrzeug 7 in der Regalgasse 6 rechnergesteuert zu verfahren, wobei die Längserstreckung der Regalgasse 6 als sogenannte "X"-Richtung bezeichnet wird. Ein Abstand zwischen den Ein- bzw. Auslagerungsseiten 4, 5 der Regalgasse 6 definiert eine lichte Weite und somit eine Gassenbreite 8.

Das Förderfahrzeug 7 kann dabei über nicht näher bezeichnete Fahrwerke an einer auf einer horizontalen Aufstandsfläche 9 angeordneten Führungsbahn, insbesondere einer Führungsschiene und einer an einer Decke des Lagersystems 1 befestigten Führungsbahn, insbesondere einer Fahrschiene, abgestützt bzw. geführt sein. Damit kann das Förderfahrzeug 7 mit zumindest einer Antriebsanordnung entlang der Fahrschien verstell- bzw. verfahrbar sein. Weiters kann das Förderfahrzeug einen mit den beiden Fahrwerken verbundenen, im Wesentlichen senkrecht zur Aufstandsfläche 9 erstreckenden Mast 10 aufweisen. Der Mast 10 kann seinerseits mit einer Führungsanordnung versehen sein, entlang welcher mittels eines Hubantriebes die Lastaufnahmevorrichtung mit einer bevorzugt horizontal verlaufenden Plattform 11, insbesondere eine Hubplattform, in einer zur Aufstandsfläche 9 senkrechten Richtung rechnungsgesteuert verstellbar, insbesondere verfahrbar sein. Auf die detaillierte Beschreibung der Lastaufnahmevorrichtung wird hierbei verzichtet, wobei diese gemäß dem bekannten Stand der Technik ausgebildet sein kann.

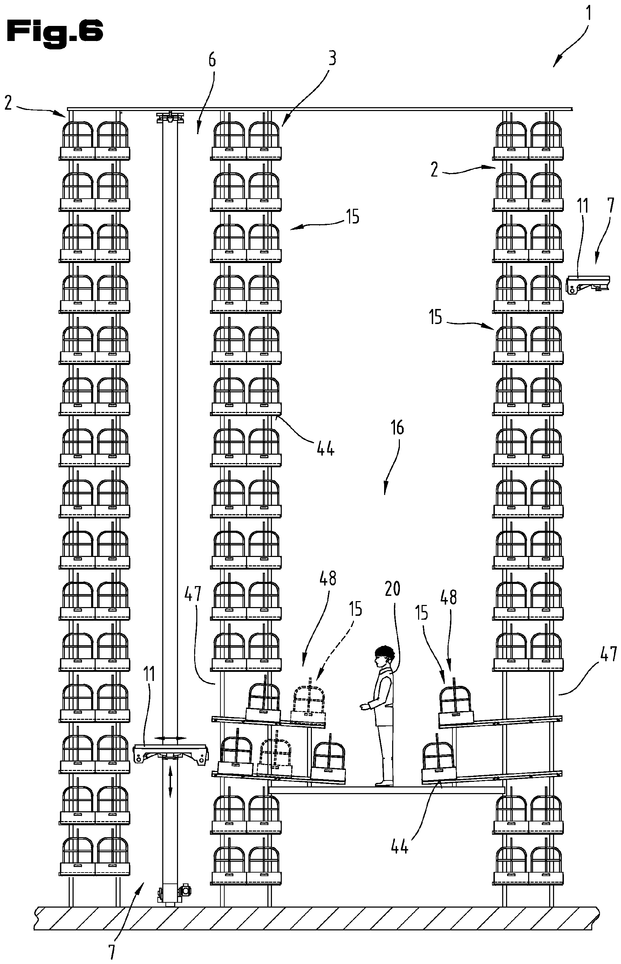

Jedes der Regallager 2, 3 weist seinerseits eine Vielzahl von Regalfächern 12, 13 auf, an denen wiederum eine Vielzahl von einzelnen Abstellplätzen 14 vorgesehen sind. Die Regalfächer 12, 13 bilden jeweils ein horizontale Lagerfläche aus, auf welcher die Ladehilfsmittel 15 mit einem Boden 25 bzw. Transportfläche 44 abstellbar sind (Fig. 2, 6). Auch können die Regallager 2, 3 Durchlaufkanäle 47 enthalten, wie in Fig. 6 ersichtlich, welche Transportbahnen umfassen, die jeweils eine geneigte Lagerfläche ausbilden.

Wird das Förderfahrzeug 7 als sogenanntes "Shuttle" ausgebildet, ist dann jedem der Regalfächer 12, 13 eine in Richtung der Regalgasse 6 verfahrbare Fördereinheit zuzuordnen, um ein- bzw. auszulagernde Ladehilfsmittel 15 mit den daran bzw. darin gespeicherten Waren verfahren zu können. Ein derartiges Lagersystem mit einem solch ausgebildeten Förderfahrzeug ist z.B. aus der DE 10 2009 032 406 A1 bekannt geworden.

So ist in der Fig. 1 eine erste Stellmöglichkeit der Ladehilfsmittel 15 gezeigt, wobei diese aufgrund ihrer in etwa rechteckigen Grundrissform in Querrichtung - also die längere Seite des Ladehilfsmittels 15 in paralleler Ausrichtung bezüglich der Regalgasse 6 - im Regallager 2, 3 abgestellt sind. In der Fig. 2 ist hingegen eine um 90° dazu gedrehte Abstellposition im Regallager 2, 3 dargestellt, bei welcher nun die kürzere Seite des Ladehilfsmittels 15 in paralleler Ausrichtung bezüglich der Regalgasse 6 angeordnet ist. Dies kann im Gegensatz zu der zuvor beschriebenen Querlagerung als Längslagerung bezeichnet werden. Die gewählte Einlagerungsrichtung der einzelnen Ladehilfsmittel 15 ist von vielen Faktoren abhängig und kann frei gewählt werden. Es wäre aber auch eine gemischte Einlagerungsweise möglich.

Das Lagersystem 1 umfasst eine automatisierte zufördernde Fördertechnik, mittels welcher Ladehilfsmittel 15 zum Regallager 2, 3 angefördert werden, und eine automatisierte abfördernde Fördertechnik, mittels welcher Ladehilfsmittel 15 vom Regallager 2, 3 abgefödert werden, beispielsweise entsprechend einem Auftrag zu einem Kommissionierplatz 16, wie dies in Fig. 1 ersichtlich ist. Die zufördernde und abfördernde Fördertechnik bilden jeweils eine Förderfläche aus, auf welcher die Ladehilfsmittel 15 mit einem Boden 25 bzw. Transportfläche 44 abstützbar und mittels welcher die Ladehilfsmittel 15 förderbar sind (Fig. 2). Die Förderfläche ist beispielweise durch eine Rollenbahn, ein Förderband, Fördergurte und dgl. gebildet. Die Ladehilfsmittel 15 werden vor ihrer temporären Einlagerung (Zwischenpufferung) mit Liegeware 22 und/oder Hängeware bestückt, entweder automatisch oder manuell.

Um Zeit und Kosten für die Kommissionierung zu sparen, wird das Lagersystem 1 mit seinen Regallagern 2, 3 und dem rechnergesteuerten Förderfahrzeug 7 als automatisiertes Lagersystem ausgebildet und das Förderprinzip "Ware zum Mann" eingesetzt.

Wie nun besser aus der Fig. 2 zu ersehen ist, sind auf einzelnen Abstellplätzen 14 des Regallagers 2 vereinfacht einige Ladehilfsmittel 15 abgestellt, wobei die detaillierte Beschreibung des Ladehilfsmittels 15 in den nachfolgenden Figuren erfolgt. Mit dem hier gewählten Regallager 2, 3 und dem gewählten Ladehilfsmittel 15 wird es möglich, in die einzelnen Regallager 2, 3 die zu bevorratenden Waren über das Förderfahrzeug 7 rechnergesteuert einzulagern und bei Bedarf die benötigten Waren gemeinsam mit dem die Ware aufnehmenden Ladehilfsmittel 15 wiederum für die Entnahme und Kommissionierung bereit zu stellen.

Für diese Entnahme kann bevorzugt in dem stirnseitigen Ende der einzelnen Regalgassen 6 ein eigener Kommissionierplatz 16 angeordnet bzw. vorgesehen sein. Dabei kann jeder die einzelnen Kommissionierplätze 16 in Draufsicht gesehen - siehe Fig. 1 - U-förmig zueinander ausgerichtete Förderstrecken 17 bis 19 umfassen. Die beiden Förderstrecken 17, 18 (abfördernde Fördertechnik) bilden hier Schenkel des U-förmigen Kommissionierplatzes 16 aus und sind bevorzugt parallel bezüglich der Regalgasse 6 ausgerichtet sowie in Querrichtung zur Regalgasse 6 voneinander distanziert angeordnet. Damit wird es möglich mit dem Förderfahrzeug 7 das oder die Ladehilfsmittel 15 vom Regallager 2, 3 in den Bereich bzw. Abschnitt des Kommissionierplatzes 16 zu verbringen. Dort erfolgt die Übergabe des oder der Ladehilfsmittel 15 vom Förderfahrzeug 7 hin auf eine der beiden parallel zur Regalgasse 6 ausgerichteten Förderstrecken 17, 18. Auf der von der Regalgasse 6 abgewendeten Seite sind die beiden Förderstrecken 17, 18 durch die weitere Förderstrecke 19 miteinander verbunden, wobei hier auch von einem Querförderer gesprochen werden kann. Im Abschnitt der den Querförderer bildenden Förderstrecke 19 kann dann mittels einer Kommissionierperson 20 von dem zur Entnahme bereitgestellten Ladehilfsmittel 15 die zu entnehmende Ware entnommen und gegebenenfalls unter Zwischenschaltung eines Pufferspeicherplatzes an ein weiteres Transportmittel 21 übergeben. Das Transportmittel 21 kann beispielsweise durch einen Horizontalförderer, wie beispielsweise ein Transportband, ein Rollenförderer oder dergleichen, gebildet sein.

Im Bereich der bereits kommissionierten Waren kann auch von einer auftragsbezogen Zusammenstellung der Waren gesprochen werden. Die dabei verwendeten Ladehilfsmittel 15 können sowohl im Bereich der Regallager 2, 3 zur Aufbewahrung und Speicherung der einzelnen Waren als auch für die auftragsbezogene Abwicklung und Bereitstellung gleichartig ausgebildet sein. So kann im Bereich des Regallagers 2, 3 von Lager-Ladehilfsmitteln und im Bereich der kommissionierten Waren von Auftrags-Ladehilfsmitteln gesprochen werden.

Die Ein- und Auslagerung der einzelnen Ladehilfsmittel 15 zwischen dem Förderfahrzeug 7 und den dafür vorgesehenen Abstellplätzen 14 erfolgt in Querrichtung zur Längserstreckung der Regalgasse 6, wobei diese Raumrichtung als sogenannte "Z"-Richtung bezeichnet wird. Die höhenmäßige bzw. vertikale Verstellrichtung bezogen auf die Aufstandsfläche 9 wird im Regallager 2, 3 als "Y"-Richtung bezeichnet.

Die Beschickung des Regallagers 2, 3 kann am anderen stirnseitigen Ende der Regalgasse 6 auf der vom Kommissionierplatz16 abgewendeten Seite erfolgen. Dazu kann je Regalgasse 6 entweder mit einem einzigen Förderfahrzeug das Auslangen gefunden werden oder es wird zumindest ein zusätzliches Förderfahrzeug 7 eingesetzt.

Unabhängig davon wäre es aber auch noch möglich, beim Ladehilfsmittel 15 nicht sein bodenseitiges Ende als Transportfläche zu verwenden, wie dies in der Behältertechnik üblich ist, sondern das gesamte Ladehilfsmittel 15 als hängenden Transportwagen zu benutzen und so wiederum ein einheitliches automatisiertes Lagersystem 1 zu schaffen. Dabei kann das Ladehilfsmittel 15 mit entsprechend angeordneten Rollen versehen werden, um so die notwendigen Verstellwege bzw. Transportwege durchführen zu können. Diese Möglichkeit ist in der Fig. 2 im obersten Regalfach 13 schematisch angedeutet.

Weiters bzw. zusätzlich dazu wäre es aber auch möglich, das Ladehilfsmittel 15 unter Zwischenschaltung einer Transportpalette in das Regalfach 12 einzulagern, wie dies im Regallager 2 in der zweiten Reihe von oben angedeutet ist. Dabei kann auch eine Kombination der unterschiedlichen Lagerarten im Regalfach 12, 13 gewählt werden.

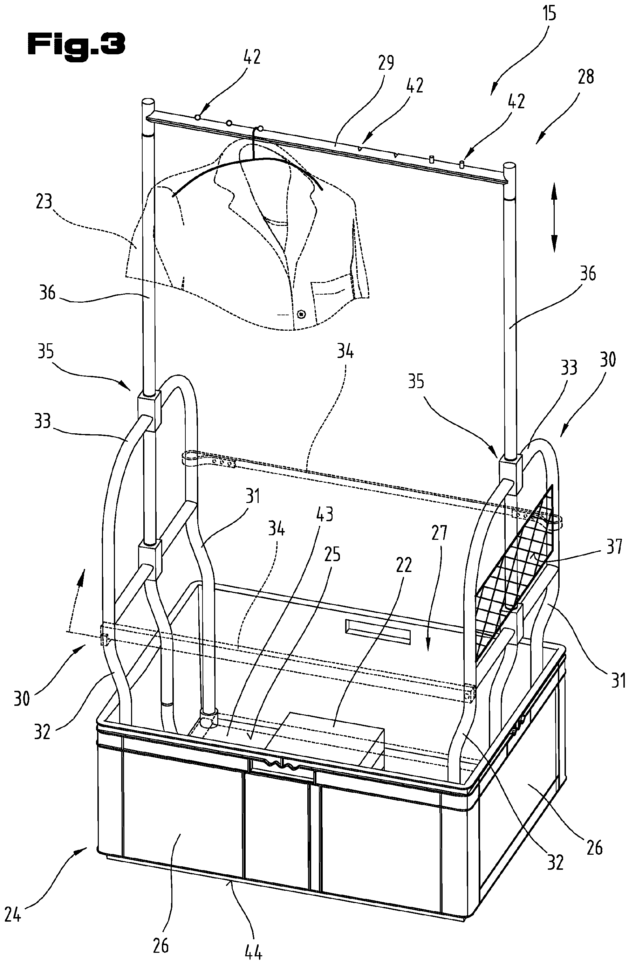

In der Fig. 3 ist eine mögliche und gegebenenfalls für sich eigenständige Ausführungsform des Ladehilfsmittels 15 gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

Das hier dargestellte Ladehilfsmittel 15 dient zur Aufnahme von Waren, wobei es sich hier um Liegeware 22 und/oder Hängeware 23 handeln kann. Damit wird ein universell einsetzbares Ladehilfsmittel 15 benötigt, bei welchem gleichzeitig sowohl die Liegeware 22 als auch die Hängeware 23 aufgenommen und im Regallager 2, 3 bevorratet werden kann. Bei der Hängeware 23 kann es sich um hochwertige Waren handeln, welche jeweils auf eigenen Kleiderbügeln aufgehängt sind. Deshalb ist auch innerhalb des Regallagers 2 ,3 auf eine hängende Speicherstellung der Ware zu achten, um Knicke, Falten usw. zu vermeiden.

So umfasst das Ladehilfsmittel 15 bei diesem Ausführungsbeispiel einen Behälter 24, welcher seinerseits einen Boden 25 und bevorzugt zumindest eine davon aufragende Seitenwand 26 umfasst. Bevorzugt werden standardmäßig verfügbare Behälter 24 eingesetzt, welche in den unterschiedlichsten zumeist normgemäßen Abmessungen in der Lagertechnik Anwendung finden. Bei dem hier gezeigten Ausführungsbeispiel umfasst der Behälter 24 vier umlaufend angeordnete Seitenwände 26, welche vom Boden 25 aufragen und dabei einen Aufnahmeraum 27 definieren. Zur Bildung des Ladehilfsmittels 15 ist weiters am Behälter 24 ein vom Boden 25 aufragendes Traggestell 28 vorgesehen, welches zumindest einen Tragbalken 29 umfasst. Der Tragbalken 29 ist über das Traggestell 28 vom Boden 25 des Behälters 24 distanziert angeordnet.

Das Traggestell 28 umfasst weiters zumindest einen vom Boden 25 aufragenden Seitenständer 30, wobei der Seitenständer 30 mit dem Tragbalken 29 verbunden ist.

Zur Erhöhung der Stabilität des Traggestells 28 kann dieses zwei in Richtung der Längserstreckung des Tragbalkens 29 voneinander distanziert angeordnete Seitenständer 30 umfassen, wobei dann der Tragbalken 29 bevorzugt mit beiden Seitenständern 30 gekuppelt ist.

Zur Erhöhung der Querstabilität - also in Querrichtung zur Längserstreckung des Tragbalkens 29 - kann der Seitenständer 30 voneinander distanziert angeordnete Rahmenteile 31, 32 umfassen. Diese beiden Rahmenteile 31, 32 können zumindest auf der vom Boden 25 abgewendeten Seite miteinander durch einen Steg 33 verbunden sein. Weiters ist auch eine gegenseitige Verbindung der beiden zusammengehörigen Rahmenteile 31 ,32 im Bodenbereich über einen weiteren Steg 33 möglich. Der oder die Stege 33 sowie die Rahmenteile 31, 32 können beispielsweise aus einem Rohrmaterial gebildet sein. Die Fertigung kann beispielsweise durch entsprechende Biegevorgänge oder dergleichen in Kombination mit Schweißvorgängen erfolgen. Die beiden Rahmenteile 31, 32 des Seitenständers 30 sind bezüglich der Längserstreckung des Tragbalkens 29 in senkrechter Richtung dazu angeordnet. Bei Vorsehen von zwei Seitenständern 30 können die Rahmenteile 31, 32 in Querrichtung zur Längserstreckung des Tragbalkens 29 eine Breite aufweisen, sodass der daraus gebildete Seitenständer 30 an den Seitenwänden 26, insbesondere den Längsseitenwänden, des Behälters 24 innen anliegend angeordnet ist.

Die beiden Seitenständer 30 des Traggestells 28 sind bevorzugt den Ein- bzw. Auslagerungsseiten 4, 5 der Regallager 2, 3 zugewendet. Dadurch ergibt sich eine parallele Ausrichtung der beiden Seitenständer 30 bezüglich der Längserstreckung der Regalgasse 6. Der Tragbalken 29 ist im Bereich der Regallager 2, 3 in senkrechter Richtung bezüglich der Förderrichtung des Förderfahrzeuges 7 bzw. der Regalgasse 6 ausgerichtet. Durch die beiden in Querrichtung zur Förderrichtung voneinander distanzierten Seitenständern 30 wird so ein gewisser Schutz der Hängeware 23 während des Transports durch das Förderfahrzeug 7 in der Regalgasse 6 hin zu den Ein- bzw. Auslagerungsseiten 4, 5 erzielt.

Um auch während des Transportvorganges sowie beim Halten und Anfahren des Ladehilfsmittels 15 ein Verschwenken der am Tragbalken 29 aufgehängten Hängeware 23 um den Tragbalken 29 zu vermindern bzw. zu vermeiden, kann zwischen den in Längserstreckung des Tragbalkens 29 voneinander distanziert angeordneten Rahmenteilen 31, 32 des Seitenständer 30 randlich zumindest ein sich dazwischen erstreckendes Stützelement 34 angeordnet sein. Dieses Stützelement 34 kann beispielsweise stabförmig ausgebildet sein und eine gewisse Eigensteifigkeit aufweisen. Um in so einem Fall den Zugang hin zu den Waren, nämlich den Hängewaren 23 und/oder Liegewaren 22, zu ermöglichen, kann das Stützelement 34 schwenkbar an einem der Rahmenteile 31, 32 gelagert und am anderen Rahmenteil 31, 32 abgestützt bzw. verriegelt sein.

Unabhängig davon könnte das Stützelement 34 aber auch durch einen Riemen, ein elastisch verformbares Spannband, wie ein Gummizug oder dergleichen, gebildet sein. Dieses kann an den randlich angeordneten und voneinander distanzierten Rahmenteilen 31, 32 gehalten bzw. befestigt sein und sich in paralleler Richtung bezüglich des Tragbalkens 29 zwischen den Rahmenteilen 31, 32 erstrecken.

Um auch im Bereich des Bodens 25 auf der vom Tragbalken 29 abgewendeten Seite eine stabile Verbindung der Seitenständer 30 des Traggestells 28 zu erzielen, können die beiden Seitenständer 30 im Bereich des Bodens 25 des Behälters 24 miteinander verbunden sein. Dies kann durch einen oder mehrere Stege erfolgen. Dabei ist bei der Anordnung und Ausbildung dieses bzw. dieser Verbindungsstege im Bodenbereich auf die im Behälter 24 aufzunehmen Liegewaren 22 Bedacht zu nehmen.

Zur individuellen Anpassung der Distanz des Tragbalkens 29 vom Boden 25 des Behälters 24 kann der Tragbalken 29 an zumindest einem der Seitenständer 30 in senkrechter Richtung bezüglich des Bodens 25 verstellbar gehaltert sein. So wäre es möglich, im Steg 33 eine Aufnahme bzw. eine Führungsanordnung 35 vorzusehen, in welcher Stützsäulen 36 in senkrechter Richtung bezüglich des Bodens 25 geführt sind. Um eine individuelle Anpassung der Distanz zwischen dem Boden 25 und dem Tragbalken 29 an die aufzunehmende Hängeware 23 zu erzielen, kann die Führungsanordnung 35 auch noch zusätzlich eine nicht näher dargestellte Rast bzw. Arretiervorrichtung umfassen, mit welcher der oder die Stützsäulen 36 bedarfsweise lösbar gehaltert sind. Die Stützsäulen 36 sind mit dem Tragbalken 29 verbunden und bilden so eine bügelförmige Haltestruktur aus.

Weiters ist es möglich, dass das Traggestell 28 im Bereich seiner äußeren Umgrenzung zumindest bereichsweise von einem Abdeckelement 37 abgedeckt bzw. umgeben ist. Ein Teilabschnitt des Abdeckelements 37 ist im Bereich des hier rechts angeordneten Seitenständers 30 als vereinfachte Gitterstruktur dargestellt.

Je nach zu speichernder bzw. transportierender Hängeware 23 kann das Abdeckelement 37 aber auch vollflächig geschlossen, beispielsweise als Abdeckplatte, insbesondere in durchsichtiger Form ausgebildet sein. Weiters kann das Abdeckelement 37 beispielsweise auch hüllenförmig ausgebildet sein und so bei sensiblen Hängewaren 23 das gesamte Traggestell 28 umgeben und sich bis hin zum Behälter 24 erstreckend angeordnet sein. Damit wird ein noch besserer Schutz der Hängewaren 23 und/oder Liegewaren 22 erzielt.

Wird das Traggestell 28 als zusammengehörige Baueinheit ausgebildet, kann dieses in dem vom Behälter 24 definierten Aufnahmeraum 27 eingesetzt sein. Zur gegenseitigen Halterung können zwischen dem Traggestell 28 und dem Behälter 24 nicht näher dargestellte Halte- bzw. Arretieranordnungen eingesetzt werden. Bevorzugt wird das Traggestell 28 mit dem Behälter 24 feststehend verbunden bzw. gekuppelt. Das kann mittels am Boden 25 vorgesehenen Aufnahmen erfolgen, in welche Abschnitte des Traggestells 28 eingesteckt werden.

Unabhängig davon wäre es aber auch möglich, das Traggestell 28 und den Behälter 24 als zusammengehörige, integrale Einheit auszubilden, wobei dann am Traggestell 28 an der vom Tragbalken 29 abgewendeten Seite der Behälter 24 mit einem Boden 25 und zumindest einer Seitenwand 26, bevorzugt vier Seitenwänden 26, ausgebildet ist.

Es kann auch eine leicht gekröpfte Ausbildung der Seitenständer 30 in deren aufragenden Längsverlauf gewählt werden, wenn auch im Bereich des Tragbalkens 29 annähernd die gleiche Speicherlänge zu Verfügung stehen soll wie innerhalb des Behälters 24 in der gleichen Raumrichtung.

Durch das hier dargestellte und beschriebene Ladehilfsmittel 15 wird es möglich, mit einer einheitlichen Lagertechnik, beispielsweise mit einem einzigen Regallager 2, 3, das Auslangen zu finden und darin sowohl Liegeware 22 als auch Hängeware 23 in einem einzigen Ladehilfsmittel 15 ein- und wiederum auslagern zu können. Die Lagertechnik in Bezug auf unterschiedlichste Behälter 24 weist derzeit schon einen hohen Automatisierungsgrad auf, wobei hier in Platz sparendster Weise die Ein- und Auslagerung durch das Förderfahrzeug 7 erfolgen kann.

Ein weiterer Vorteil ergibt sich noch dadurch, dass bei diesem kombinierten Ladehilfsmittel 15 Hängeware 23 bei einem unbeabsichtigten Lösen von einem Kleiderbügel bzw. dem Tragbalken 29 nicht im Regallager 2, 3 verloren gehen kann, sondern in den Behälter 24 fällt. Damit kann der Schwund in einem Distributionscenter minimiert bzw. egalisiert werden.

Der Einsatz derartiger Ladehilfsmittel 15 wäre aber auch außerhalb des Lagersystems denkbar, da die kommissionierte und bereitgestellte Ware je nach Empfänger in einem eigenen Ladehilfsmittel 15 eingelagert werden kann und dieses dem jeweiligen Empfänger zugestellt wird. Nach der Zulieferung und der Entnahme der bestellten Waren kann da geleerte Ladehilfsmittel 15 wiederum dem Distributionscenter zurückgesandt und in den neuerlichen Kommissionierkreislauf eingebracht werden.

Weiters können im Bereich des Tragbalkens 29 noch vereinfacht dargestellte Positionierelemente 42 für die bevorzugt auf Kleiderbügeln hängende Hängeware 23 vorgesehen sein. Diese Positionierelemente 42 sind in Längsrichtung des Tragbalkens voneinander in bevorzugt vorgegebenen Abständen angeordnet und dienen dazu, dass einerseits die Hängewaren 23 in einem vorbestimmten Abstand zueinander aufgehängt sind und andererseits während der Transportbewegung und vor allem bei raschen Geschwindigkeitsänderungen die Hängewaren 23 nicht zusammengeschoben werden. Damit wird auch eine ungewollte, einseitige Verlagerung des Gesamtschwerpunktes der Hängewaren 23 bezogen auf das Ladehilfsmittel 15 vermieden und so eine zentrische Ausrichtung bezogen auf den Boden 25 erreicht werden. Die Positionierelemente 42 sind gerade bei sensiblen, hochwertigen Kleidungsstücken günstig. Das oder die Positionierelemente 42 können durch Noppen, Stifte, Bolzen, Kugeln, Vertiefungen, Rillen usw. gebildet sein. Damit wird eine Art Bügelrutschsicherung der Hängeware 23 am Tragbalken 29 erreicht.

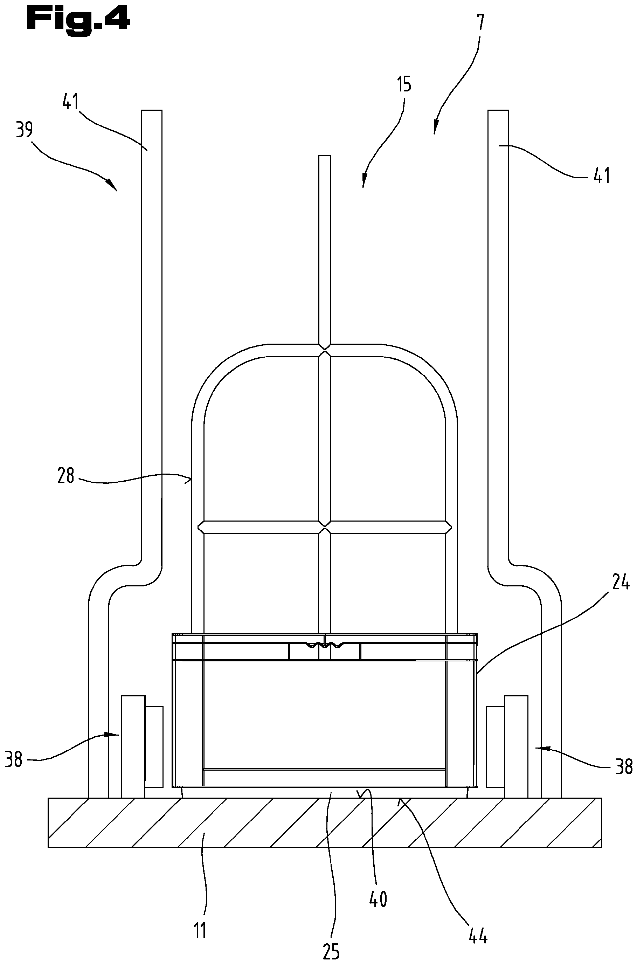

In der Fig. 4 ist eine weitere und gegebenenfalls für sich eigenständige Ausführungsform der Lastaufnahmevorrichtung des Förderfahrzeuges 7 gezeigt, wobei wiederum für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen.

Die Lastaufnahmevorrichtung dient zur Aufnahme zumindest eines Ladehilfsmittels 15 und umfasst eine Plattform 11 sowie vereinfacht angedeutete automatisierte bzw. rechnergesteuerte Betätigungsmittel 38 zur Einlagerung des Ladehilfsmittels 15 in ein Regalfach 12, 13 des Regallagers 2, 3 bzw. zum Auslagern des Ladehilfsmittels 15 aus dem Regalfach 12, 13 des Regallagers 2, 3. Das oder die Betätigungsmittel 38 sind hier im vorliegenden Ausführungsbeispiel durch Teleskoparme gebildet, mit welchen das Ladehilfsmittel 15 von der Plattform 11 in das Regallager 2, 3 hinein bewegt sowie auch wiederum entnommen werden kann. Es wären aber auch andere Ausbildungen wie z.B. Förderbänder, Stellvorrichtungen oder dgl. möglich, wie diese hinlänglich bekannt sind. Das Förderfahrzeug umfasst eine vertikal und/oder horizontal bewegbare Förderfläche, welche von der Plattform 11 oder dem Betätigungsmittel 38 ausgebildet ist. Das Ladehilfsmittel 15 ist mit einem Boden 25 bzw. Transportfläche 44 auf der Förderfläche abstützbar (Fig. 4). Gegebenenfalls kann das Ladehilfsmittel 15 mittels der Förderfläche auch gefördert werden.

An der Plattform 11 ist eine Stützvorrichtung 39 vorgesehen, wobei diese einen Stellplatz 40 zwischen voneinander distanziert angeordneten Anschlagelementen 41 für das Ladehilfsmittel 15 begrenzt.

Damit kann bei rasch zunehmender Transportgeschwindigkeit oder bei einem Not-Stopp des Förderfahrzeuges 7 ein Kippen des Ladehilfsmittels 15 an der Plattform 11 verhindert werden.

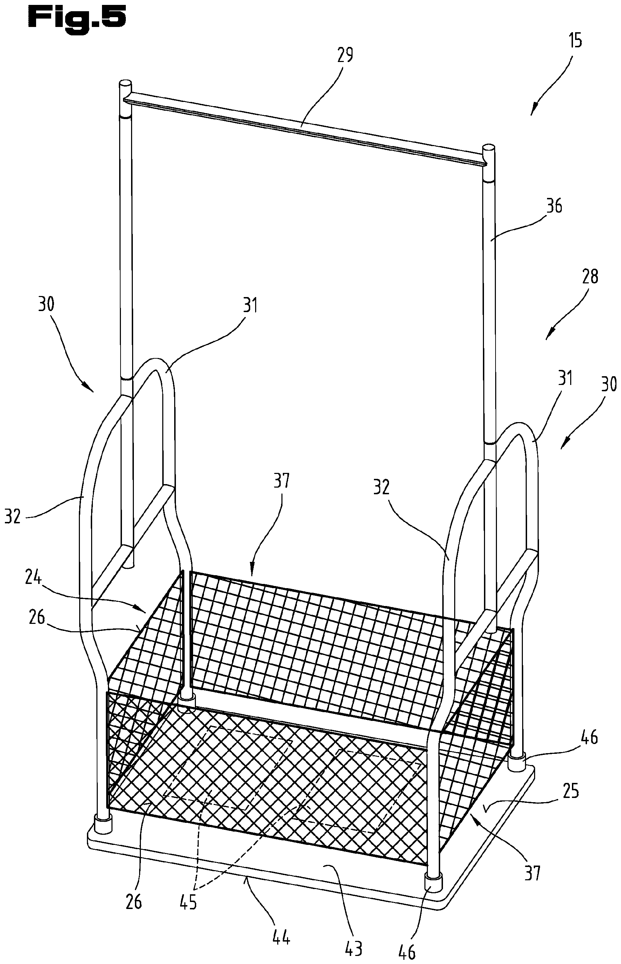

In der Fig. 5 ist eine weitere und gegebenenfalls für sich eigenständige Ausführungsform des Ladehilfsmittels 15 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Das hier dargestellte Ladehilfsmittel 15 kann ebenfalls für ein automatisiertes Lagersystem 1 Anwendung finden, in welchem die Hängeware 23 und/oder die Liegeware 22 aufgenommen und transportiert werden kann und für die nachfolgende Kommissionierung im Regallager 2, 3 bevorratet gelagert werden kann. Das Ladehilfsmittel 15 umfasst hier wiederum das zuvor beschriebene Traggestell 28 für die nicht näher dargestellte Hängeware 23 sowie einen bodenseitig angeordneten Warenträger 43. Dieser Warenträger 43 ist tablarförmig, insbesondere plattenförmig, ausgebildet und bildet auf seiner vom Tragbalken 29 abgewendeten Seite eine Transportfläche 44 für das gesamte Ladehilfsmittel 15 aus. Damit bildet in diesem Ausführungsbeispiel der Warenträger 43 den Boden 25 des Ladehilfsmittels 15 aus. Diese Ausbildung des Ladehilfsmittels 15 mit dem Traggestell 28 sowie den den Boden 25 bildenden Warenträger 43 kann somit eine Minimalausbildung darstellen, bei welcher auf alle Fälle zumindest die Hängeware 23 am Tragbalken 29 aufgehängt werden kann. Zusätzlich dazu kann dann aber auch noch am Warenträger 43 die Liegeware 22 abgelegt werden. Dafür bildet der den Boden 25 bildende Warenträger 43 auf der von der Transportfläche 44 abgewendeten Seite zumindest einen Aufnahmeplatz 45 aus.

Auf diesem oder diesen Aufnahmeplätzen 45 können dann auch noch die zusätzlichen Liegewaren 22 am Ladehilfsmittel 15 abgelegt sein. Je nach Art und Weise der abzulegenden Liegeware 22 kann auf die Anordnung von den zuvor beschriebenen Seitenwänden 26 zur Bildung des Behälters 24 verzichtet werden. Dies wäre z.B. dann möglich, wenn die Liegeware 22 in einem eigenen Behälter, wie einer Schachtel oder dergleichen, abgelegt ist.

Der Warenträger 43 kann seinerseits aus einem vollen Plattenmaterial, einem plattenförmigen Bauteil mit einer Gitterstruktur oder eine Kombination aus einem plattenförmigen Element mit daran angeordneten Verstärkungsrippen gebildet sein. Zur Verwendung in einem automatisierten Lagersystem 1 soll der Warenträger 43 eine Mindeststärke zwischen der Transportfläche 44 und dem Aufnahmeplatz 45 aufweisen, damit ein ordnungsgemäßer Transport auf den unterschiedlichsten Transportsystemen des Lagersystems 1 ermöglicht wird. Darüber hinaus ist auch auf die dort vorgesehenen Sensoren, Messvorrichtungen sowie deren Erfassungsvorrichtungen und deren Betätigung bzw. Auslösung Bedacht zu nehmen.

Bevorzugt wird das Traggestell 28, insbesondere deren Seitenständer 30, im Bereich des den Boden 25 bildenden Warenträgers 43 mit diesem verbunden. Dafür können beispielsweise am Warenträger 43 Aufnahmen 46 vorgesehen sein. In diese Aufnahmen 46 können dann beispielsweise die rohrförmigen Rahmenteile 31, 32 der jeweiligen Seitenständer 30 eingesteckt und dort arretiert bzw. fixiert gehaltert sein. Es können aber auch Ansätze vorgesehen sein, auf welche die Enden der Rahmenteile 31, 32 aufgesteckt werden und dort eine Halterung bzw. Fixierung erfolgt. Damit wird eine stabile Verbindung zwischen dem Traggestell 28 und dem Warenträger 43 erzielt.

Wie bereits zuvor beschrieben, kann das Traggestell 28 im Bereich seiner äußeren Umgrenzung zumindest bereichsweise vom Abdeckelement 37 abgedeckt sein. Bei diesem hier gezeigten Ausführungsbeispiel ist zumindest ein Abdeckelement 37 vorgesehen, welches im Bereich des den im Boden 25 bildenden Warenträgers 43 angeordnet ist. So kann dann das bzw. können die Abdeckelemente 37 eine oder mehrere Seitenwände 26 zur Bildung eines Behälters 24 bilden. Damit kann wiederum das unbeabsichtigte Herausrutschen bzw. Verlagern der Liegeware 22 von den dafür vorgesehenen Aufnahmeplätzen 45 am Warenträger 43 verhindert werden.

Dabei können die Abdeckelemente 37 beispielsweise nur an den Rahmenteilen 31, 32 des Traggestells 28 gehaltert bzw. festigt sein. Zusätzlich dazu oder unabhängig davon wäre aber auch eine Verbindung mit dem Warenträger 43 möglich. Auch hier kann wiederum je nach Anforderung und Art der abzuspeichernden Liegeware 22 das Abdeckelement 37 durchgehend vollflächig oder aber auch als Gitter oder als Wand mit einer Lochstruktur ausgebildet sein.

In der Fig. 6 ist eine weitere und gegebenenfalls für sich eigenständige Ausführungsform eines Lagersystems 1 mit Regallagern 2, 3 gezeigt, in welchen mehrere Ladehilfsmittel 15 bevorratet gelagert werden können. Dabei werden wiederum für gleiche Teile gleiche Bezugszeichen bzw. Bauteilbezeichnungen wie in den vorangegangen Fig. 1 bis 5 verwendet. Um unnötige Wiederholungen zu vermeiden, wird auf die detaillierte Beschreibung in den vorangegangenen Fig. 1 bis 5 hingewiesen bzw. Bezug genommen.

Bei diesem hier gezeigten Ausführungsbeispiel ist zwischen den beiden Regallagern 2, 3 die Regalgasse 6 angeordnet, in welcher das Förderfahrzeug 7 mit seiner Plattform 11 zum Transport der einzelnen Ladehilfsmittel 15 hin zum Kommissionierplatz 16 und nach der Kommissionierung von diesem wieder zurück ins Regallager 2, 3 angeordnet ist. Bei diesem Lagersystem 1 wird eine sogenannte Durchlaufkanalkommissionierung angewendet, bei welcher das Ladehilfsmittel 15 vom Förderfahrzeug 7 von einem der Stapelplätze der Regallager 2, 3 entnommen und in den Bereich des Kommissionierplatzes 16 transportiert wird. Das Förderfahrzeug 7 mit seiner Plattform 11 verbringt das Ladehilfsmittel 15 regalgassenseitig zu einem Durchlaufkanal 47 im Bereich des Regallagers 3, welcher hin zum Kommissionierplatz 16 führt. Im Bereich des Kommissionierplatzes 16 ist dann ein Bereitstellungsbereich 48 für das bzw. die zur Kommissionierung bereitgestellten Ladehilfsmittel 15 vorgesehen.

Der Transport bzw. die Weiterbewegung des im Durchlaufkanal 47 bereit gestellten Ladehilfsmittels 15 erfolgt auf zumeist nicht angetriebenen Rollenbahnen, auf welchen das Ladehilfsmittel 15 aufgrund der Schwerkraft vom Übergabeplatz hin zum Bereitstellungsbereich 48 gleiten kann. Diese Förderbahnen können beispielsweise aus Röllchenschienen aber auch als angetriebene Transportbahnen mit den unterschiedlichsten Antriebsmitteln ausgebildet sein. Werden angetriebene Transportbahnen verwendet, können damit exaktere Verstellwege für das Ladehilfsmittel 15 erzielt werden. Bei dieser Form der Ausbildung des Kommissionierplatzes 16 können die Transport- bzw. Förderbahnen auch als Stichbahnen bezeichnet werden, welcher in senkrechter Richtung bezogen auf das Regallager 2, 3 dazu in senkrechter Richtung aus dem Lager heraus bzw. hinein führen.

Nach erfolgter Kommissionierung und Entnahme der benötigten Waren aus dem oder den jeweiligen Ladehilfsmitteln 15 wird das bzw. werden die nicht mehr benötigten Ladehilfsmittel 15 von der Kommissionierperson 20 in eine Bereitstellungsposition verbracht, in welcher das Ladehilfsmittel 15 beispielsweise mit Teleskoparmen wieder auf die Plattform 11 des Förderfahrzeuges 7 zurücktransportiert wird. Nach erfolgter Aufnahme auf der Plattform 11 verbringt das Förderfahrzeug 7 das nicht mehr benötigte Ladehilfsmittel 15 auf den dafür vorgesehenen Stellplatz innerhalb des Regallagers 2, 3.

Bei der Beladung bzw. Beschickung der einzelnen Ladehilfsmittel 15 mit den Waren 22, 23 können unterschiedliche logistische Ablagesysteme angewendet werden. So kann es z.B. sein, dass von einem Artikel stets die gleiche Farbe jedoch unterschiedliche Größen in einem Ladehilfsmittel 15 eingelagert werden. Dabei kann auch noch nach Damen und/oder Herrenbekleidung getrennt abgelegt werden. Unabhängig davon könnte aber auch in einem Ladehilfsmittel 15 stets der gleiche Artikel, jedoch in zueinander unterschiedlichen Farben eingelagert werden. Dabei könnte auch noch jede einzelne Größe an Artikel getrennt in einem eigenen Ladehilfsmittel 15 gespeichert werden.

Der Ordnung halber sei abschließend darauf hingewiesen, dass zum besseren Verständnis des Aufbaus des Lagersystems 1 bzw. des Ladehilfsmittels 15 dieses bzw. dessen Bestandteile teilweise unmaßstäblich und/oder vergrößert und/oder verkleinert dargestellt wurden.

Die Ausführungsbeispiele zeigen mögliche Ausführungsvarianten des Lagersystems 1 bzw. des Ladehilfsmittels 15, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind.

**Bezugszeichenaufstellung**

| | | | |
|---|---|---|---|
| 1 | Lagersystem | 26 | Seitenwand |
| 2 | Regallager | 27 | Aufnahmeraum |
| 3 | Regallager | 28 | Traggestell |
| 4 | Ein- bzw. Auslagerungsseite | 29 | Tragbalken |
| 5 | Ein- bzw. Auslagerungsseite | 30 | Seitenständer |
| | | | |
| 6 | Regalgasse | 31 | Rahmenteil |
| 7 | Förderfahrzeug | 32 | Rahmenteil |
| 8 | Gassenbreite | 33 | Steg |
| 9 | Aufstandsfläche | 34 | Stützelement |
| 10 | Mast | 35 | Führungsanordnung |
| | | | |
| 11 | Plattform | 36 | Stützsäule |
| 12 | Regalfach | 37 | Abdeckelement |
| 13 | Regalfach | 38 | Betätigungsmittel |
| 14 | Abstellplatz | 39 | Stützvorrichtung |
| 15 | Ladehilfsmittel | 40 | Stellplatz |
| | | | |
| 16 | Kommissionierplatz | 41 | Anschlagelement |
| 17 | Förderstrecke | 42 | Positionierelement |
| 18 | Förderstrecke | 43 | Warenträger |
| 19 | Förderstrecke | 44 | Transportfläche |
| 20 | Kommissionierperson | 45 | Aufnahmeplatz |
| | | | |
| 21 | Transportmittel | 46 | Aufnahme |
| 22 | Liegeware | 47 | Durchlaufkanal |
| 23 | Hängeware | 48 | Bereitstellungsbereich |
| 24 | Behälter | | |
| 25 | Boden | | |

## Patentansprüche

1. Verfahren zum Transport von Liegewaren (22) und Hängewaren (23) in Ladehilfsmitteln (15) mit einer Fördertechnik in einem weitestgehend automatisierten Lagersystem (1) wobei das Ladehilfsmittel (15) einen Warenträger (43) mit einem Boden (25) umfasst, welcher auf seiner oberen Seite zumindest einen Aufnahmeplatz (45) ausbildet, auf welchem zumindest eine Liegeware (22) abgelegt werden kann, und ein Traggestell (28) umfasst, auf welchem zumindest eine Hängeware (23) aufgehängt werden kann, wobei zumindest eine Liegeware (22) und/oder zumindest eine Hängeware (23) auf das Ladehilfsmittel (15) geladen und mit dem Ladehilfsmittel (15) auf einer zufördernden Fördertechnik zu einem Regallager (2, 3) transportiert wird, wobei das Ladehilfsmittel (15) mittels einem Förderfahrzeug (7) von der zufördernden Fördertechnik übernommen und in ein Regalfach (12, 13) des Regallagers (2, 3) eingelagert (gepuffert) und gemäß einem Auftrag mittels einem Förderfahrzeug (7) aus einem Regalfach (12, 13) des Regallagers (2, 3) ausgelagert und auf eine abfördernde Fördertechnik übergeben sowie von der abfördernden Fördertechnik von einem Regallager (2, 3) abtransportiert wird, wobei während dem Transportvorgang das Ladehilfsmittel (15) mit seinem Boden (25) auf einer Förderfläche der Fördertechniken oder dem Förderfahrzeug (7) und während dem Lagervorgang das Ladehilfsmittel (15) mit seinem Boden (25) auf einer Lagerfläche des Regalfaches (12, 13) aufliegt.

2. Automatisiertes Lagersystem (1) zum Lagern und/oder Kommissionieren von Liegewaren (22) und Hängewaren (23) und zur Durchführung des Verfahrens nach Anspruch 1, umfassend zumindest ein Regallager (2, 3) mit Regalfächern (12, 13), zumindest ein in einer Regalgasse (6) verfahrbares Förderfahrzeug (7) mit einer Lastaufnahmevorrichtung sowie zumindest ein Ladehilfsmittel (15), wobei die Lastaufnahmevorrichtung zur Einlagerung des Ladehilfsmittels (15) in das Regalfach (12, 13) bzw. zum Auslagern des Ladehilfsmittels (15) aus dem Regalfach (12, 13) ausgebildet ist, **dadurch gekennzeichnet, dass** das Ladehilfsmittel (15) zur Aufnahme von Hängeware (23) und Liegeware (22) ausgebildet ist, wobei das Ladehilfsmittel (15) einen Warenträger (43) mit einem Boden (25), welcher auf einer oberen Seite zumindest einen Aufnahmeplatz (45) für eine Liegeware (22) und auf einer unteren Seite eine Transportfläche (44) ausbildet, und ein am Boden (25) aufragendes und daran fixiertes Traggestell (28), das zumindest einen vom Boden (25) distanziert angeordneten Tragbalken (29) zum Aufhängen einer Hängeware (23) ausbildet, umfasst.

3. Lagersystem (1) nach Anspruch 2, **dadurch gekennzeichnet, dass** das Traggestell (28) zumindest einen vom Boden (25) aufragenden Seitenständer (30) umfasst und der Seitenständer (30) mit dem Tragbalken (29) verbunden ist.

4. Lagersystem (1) nach Anspruch 3, **dadurch gekennzeichnet, dass** der Seitenständer (30) in Querrichtung bezüglich der Längserstreckung des Tragbalkens (29) voneinander distanziert angeordnete Rahmenteile (31, 32) umfasst, welche zumindest auf der vom Boden (25) abgewendeten Seite miteinander verbunden sind.

5. Lagersystem (1) nach Anspruch 3 oder 4, **dadurch gekennzeichnet, dass** das Traggestell (28) zwei in Richtung der Längserstreckung des Tragbalkens (29) voneinander distanziert angeordnete Seitenständer (30) umfasst und der Tragbalken (29) mit beiden Seitenständern (30) gekuppelt ist.

6. Lagersystem (1) nach einem der Ansprüche 3 bis 5, **dadurch gekennzeichnet, dass** zwischen den in Längserstreckung des Tragbalkens (29) voneinander distanziert angeordneten Rahmenteilen (31, 32) des Seitenständers (30) randlich zumindest ein sich dazwischen erstreckendes Stützelement (34) angeordnet ist.

7. Lagersystem (1) nach Anspruch 6, **dadurch gekennzeichnet, dass** das Stützelement (34) schwenkbar an einem der Rahmenteile (31, 32) gelagert ist.

8. Lagersystem (1) nach einem der Ansprüche 2 bis 7, **dadurch gekennzeichnet, dass** der Tragbalken (29) an zumindest einem der Seitenständer (30) des Traggestells (28) in senkrechter Richtung bezüglich des Bodens (25) verstellbar gehaltert ist.

9. Lagersystem (1) nach einem der Ansprüche 2 bis 8, **dadurch gekennzeichnet, dass** das Traggestell (28) im Bereich seiner äußeren Umgrenzung zumindest bereichsweise von einem Abdeckelement (37) abgedeckt ist.

10. Lagersystem (1) nach Anspruch 9, **dadurch gekennzeichnet, dass** das Abdeckelement (37) im Bereich des, den Boden (25) bildenden Warenträgers (43) angeordnet ist und zumindest eine Seitenwand (26) bildet.

11. Lagersystem (1) nach einem der Ansprüche 2 bis 10, **dadurch gekennzeichnet, dass** an dem, den Boden (25) bildenden Warenträger (43) zumindest eine davon aufragende Seitenwand (26) angeordnet ist und diese einen Behälter (24) ausbildet.

12. Lagersystem (1) nach einem der Ansprüche 2 bis 11, **dadurch gekennzeichnet, dass** das Traggestell (28) mit dem, den Boden (25) bildenden Warenträger (43) verbunden ist.

13. Lagersystem (1) nach einem der Ansprüche 2 bis 12, **dadurch gekennzeichnet, dass** am Traggestell (28) an der vom Tragbalken (29) abgewendeten Seite der, den Boden (25) bildende Warenträger (43) als integraler Bestandteil gegebenenfalls mit zumindest einer Seitenwand (26) ausgebildet ist.

14. Lagersystem (1) nach Anspruch 2, **dadurch gekennzeichnet, dass** an einem stirnseitigen Ende der Regalgasse (6) und/oder an einem seitlichen Ende des Regallagers (3, 4) zumindest ein Kommissionierplatz (16) angeordnet ist.

15. Lagersystem (1) nach Anspruch 14, **dadurch gekennzeichnet, dass** der Kommissionierplatz (16) in Draufsicht U-förmig zueinander ausgerichtete Förderstrecken (17 bis 19) umfasst, wobei Schenkel des U-förmigen Kommissionierplatzes (16) parallel bezüglich der Regalgasse (6) ausgerichtet und auf der von der Regalgasse (6) abgewendeten Seite mit einem die Förderstrecke (19) bildenden Querförderer verbunden sind.

## Claims

1. A method for transporting laying articles (22) and hanging articles (23) in loading aids (15) with conveying equipment in a largely automated storage system (1), wherein the loading aid (15) comprises a goods carrier (43) with a base (25), which forms on its upper side at least one receiving space (45), on which at least one laying article (22) can be deposited, and a supporting frame (28), on which at least one hanging article (23) can be hung, wherein at least one laying article (22) and/or at least one hanging article (23) is loaded onto the loading aid (15) and is transported with the loading aid (15) on an incoming conveying equipment to a rack store (2, 3), wherein the loading aid (15) is transferred by means of a conveyor vehicle (7) from the incoming conveying equipment and is stored (buffered) into a rack bay (12, 13) of the rack store (2, 3) and, in accordance with an order, is retrieved by means of a conveyor vehicle (7) from a rack bay (12, 13) of the rack store (2, 3) and is transferred to an outgoing conveying equipment and is transported away by the outgoing conveying equipment from a rack store (2, 3), wherein during the transport process the loading aid (15) rests with its base (25) on a conveying surface of the conveying equipment or on the conveyor vehicle (7), and during the storage process the loading aid (15) rests with its base (25) on a storage surface of the rack bay (12, 13).

2. An automated storage system (1) for the storing and/or order picking of laying articles (22) and hanging articles (23) and for carrying out the method according to claim 1, comprising at least one rack store (2, 3) with rack bays (12, 13), at least one conveyor vehicle (7) movable in an aisle (6), with a load receiving device and at least one loading aid (15), wherein the load receiving device is constructed for the storing of the loading aid (15) into the rack bay (12, 13) or respectively for the retrieval of the loading aid (15) out from the rack bay (12, 13), **characterized in that** the loading aid (15) is constructed for receiving hanging article (23) and laying article (22), wherein the loading aid (15) comprises an article carrier (43) with a base (25), which forms on an upper side at least one receiving space (45) for a laying article (22) and on a lower side forms a transport surface (44), and a supporting frame (28), rising on the base (25) and fixed thereon, which forms at least one supporting beam (29), arranged at a distance from the base (25), for the hanging of a hanging article (23).

3. A storage system (1) according to claim 2, **characterized in that** the supporting frame (28) comprises at least one lateral upright (30) rising from the base (25), and the lateral upright (30) is connected to the supporting beam (29).

4. The storage system (1) according to claim 3, **characterized in that** the lateral upright (30) comprises frame parts (31, 32), arranged spaced apart from one another in transverse direction with respect to the longitudinal extent of the supporting beam (29), which frame parts are connected to one another at least on the side facing away from the base (25).

5. The storage system (1) according to claim 3 or 4, **characterized in that** the supporting frame (28) comprises two lateral uprights (30), arranged spaced apart from one another in the direction of the longitudinal extent of the supporting beam (29), and the supporting beam (29) is coupled to both lateral uprights (30).

6. The storage system (1) according to one of claims 3 to 5, **characterized in that** between the frame parts (31, 32) of the lateral upright (30), which are arranged spaced apart from one another in longitudinal extent of the supporting beam (29), at least one support element (34), extending therebetween, is arranged at the edge.

7. The storage system (1) according to claim 6, **characterized in that** the support element (34) is mounted pivotably on one of the frame parts (31, 32).

8. The storage system (1) according to one of claims 2 to 7, **characterized in that** the supporting beam (29) is mounted adjustably on at least one of the lateral uprights (30) of the supporting frame (28) in vertical direction with respect to the base (25).

9. The storage system (1) according to one of claims 2 to 8, **characterized in that** the supporting frame (28) is covered in the region of its outer delimitation at least in certain areas by a covering element (37).

10. The storage system (1) according to claim 9, **characterized in that** the covering element (37) is arranged in the region of the article carrier (43) forming the base (25), and forms at least one side wall (26).

11. The storage system (1) according to one of claims 2 to 10, **characterized in that** on the article carrier (43), forming the base (25), at least one side wall (26) is arranged rising therefrom, and this forms a container (24).

12. The storage system (1) according to one of claims 2 to 11, **characterized in that** the supporting frame (28) is connected to the article carrier (43) forming the base (25).

13. The storage system (1) according to one of claims 2 to 12, **characterized in that** on the supporting frame (28), on the side facing away from the supporting beam (29), the article carrier (43), forming the base (25), is constructed as an integral component if applicable with at least one side wall (26).

14. The storage system (1) according to claim 2, **characterized in that** on a front-face end of the aisle (6) and/or on a lateral end of the rack store (3, 4) at least one order-picking space (16) is arranged.

15. The storage system (1) according to claim 14, **characterized in that** the order-picking space (16) comprises conveying sections (17 to 19), aligned in a U-shape with respect to one another in top view, wherein arms of the U-shaped order-picking space (16) are aligned parallel with respect to the aisle (6) and on the side facing away from the aisle (6) are connected to a transverse conveyor forming the conveying path (19).

## Revendications

1. Procédé pour le transport de marchandises à plat (22) et de marchandises suspendues (23) dans des moyens auxiliaires de stockage (15) à l'aide d'une technique de manutention dans un système de stockage en majeure partie automatisé (1), dans lequel le moyen auxiliaire de stockage (15) comprend un support de marchandises (43) avec un plancher (25), qui forme au moins un emplacement de réception (45) sur son côté supérieur, sur lequel au moins une marchandise à plat (22) peut être déposée, et comprend un châssis de support (28), sur lequel au moins une marchandise suspendue (23) peut être suspendue, dans lequel au moins une marchandise à plat (22) et/ou au moins une marchandise suspendue (23) est ou sont stockées sur le moyen auxiliaire de stockage (15) et transportées avec le moyen auxiliaire de stockage (15) via une technique de manutention d'introduction vers un rayonnage de stockage (2, 3), dans lequel le moyen auxiliaire de stockage (15) va prendre en charge au moyen d'un véhicule de transport (7) de la technique de manutention d'introduction et entreposer (accumuler) dans un casier de rayonnage (12, 13) du rayonnage de stockage (2, 3), et conformément à une commande, va extraire d'un casier de rayonnage (12, 13) du rayonnage de stockage (2, 3) au moyen d'un véhicule de transport (7), livrer via une technique de manutention de déchargement et évacuer d'un rayonnage de stockage (2, 3) via la technique de manipulation de déchargement, dans lequel pendant le processus de transport, le moyen auxiliaire de stockage (15) repose avec son plancher (25) sur une surface de manutention de la technique de manutention ou du véhicule de transport (7) et pendant le processus de stockage, le moyen auxiliaire de stockage (15) repose avec son plancher (25) sur une surface portante du casier de rayonnage (12, 13).

2. Système de stockage automatisé (1) pour le stockage et/ou la mise à disposition de marchandises à plat (22) et de marchandises suspendues (23) et pour mettre en oeuvre le procédé selon la revendication 1, comprenant au moins un rayonnage de stockage (2, 3) avec des casiers de rayonnage (12, 13), au moins un véhicule de transport (7) pouvant être déplacé dans une allée de rayonnage (6) avec un dispositif de réception de charge et au moins un moyen auxiliaire de stockage (15), dans lequel le dispositif de réception de charge est formé respectivement pour entreposer le moyen auxiliaire de stockage (15) dans le casier de rayonnage (12, 13) et pour enlever le moyen auxiliaire de stockage (15) du casier de rayonnage (12, 13), **caractérisé en ce que** le moyen auxiliaire de stockage (15) est agencé pour la réception de marchandises suspendues (23) et de marchandises à plat (22), dans lequel le moyen auxiliaire de stockage (15) comprend un support de marchandises (43) avec un plancher (25), qui forme sur un côté supérieur au moins un emplacement de réception (45) pour une marchandise à plat (22), et sur un côté inférieur une surface de transport (44), et comprend un châssis de support (28) reçu et fixé sur le plancher (25), qui forme au moins une poutre de support (29) agencée à distance du plancher (25), pour suspendre des marchandises suspendues (23).

3. Système de stockage (1) selon la revendication 2, **caractérisé en ce que** le châssis de support (28) comprend au moins un montant latéral (30) vertical depuis le plancher (25), et le montant latéral (30) est relié à la poutre de support (29).

4. Système de stockage (1) selon la revendication 3, **caractérisé en ce que** le montant latéral (30) comprend des parties de cadre (31, 32) agencées à distance l'une de l'autre dans une direction transversale par rapport à l'étendue longitudinale de la poutre de support (29), qui sont reliées ensemble au niveau du côté opposé au plancher (25).

5. Système de stockage (1) selon la revendication 3 ou 4, **caractérisé en ce que** le châssis de support (28) comprend deux montants latéraux (30) agencés à distance l'une de l'autre dans le sens de l'étendue longitudinale de la poutre de support (29), et la poutre de support (29) est couplée aux deux montants latéraux (30).

6. Système de stockage (1) selon l'une des revendications 3 à 5, **caractérisé en ce qu'**entre les parties de cadre (31, 32) du montant latéral (30) agencées à distance l'une de l'autre dans l'étendue longitudinale de la poutre de support (29) en périphérie est agencé au moins un élément de support (34) s'étendant entre les deux.

7. Système de stockage (1) selon la revendication 6, **caractérisé en ce que** l'élément de support (34) est monté de manière pivotante sur l'une des parties de cadre (31, 32).

8. Système de stockage (1) selon l'une quelconque des revendications 2 à 7, **caractérisé en ce que** la poutre de support (29) est supportée de manière réglable sur au moins une des montants latéraux (30) du châssis de support (28) dans une direction perpendiculaire par rapport au plancher (25).

9. Système de stockage (1) selon l'une quelconque des revendications 2 à 8, **caractérisé en ce que** le châssis de support (28) est recouvert au moins partiellement par un élément de recouvrement (37) dans la zone de son périmètre extérieur.

10. Système de stockage (1) selon la revendication 9, **caractérisé en ce que** l'élément de recouvrement (37) est agencé dans la zone du support de marchandises (43) formant le plancher (25), et forme au moins une paroi latérale (26).

11. Système de stockage (1) selon l'une quelconque des revendications 2 à 10, **caractérisé en ce que** sur le support de marchandises (43) formant le plancher (25) est agencée au moins une paroi latérale (26) verticale par rapport à celui-ci, et qui forme un conteneur (24).

12. Système de stockage (1) selon l'une quelconque des revendications 2 à 11, **caractérisé en ce que** le châssis de support (28) est relié au support de marchandises (43) formant le plancher (25).

13. Système de stockage (1) selon l'une quelconque des revendications 2 à 12, **caractérisé en ce qu'**au niveau du châssis de support (28), sur le côté opposé à la poutre de support (29), le support de marchandises (43) formant le plancher (25) est formé en tant que partie intégrante le cas échéant avec au moins une paroi latérale (26).

14. Système de stockage (1) selon la revendication 2, **caractérisé en ce qu'**au niveau d'une extrémité avant de l'allée de rayonnage (6) et/au niveau d'une extrémité latérale du rayonnage (3, 4) est agencé au moins un poste de préparation (16).

15. Système de stockage (1) selon la revendication 14, **caractérisé en ce que** le poste de préparation (16) comprend des voies de manutention (17 à 19) orientées les unes par rapport aux autres en forme de U en vue de dessus, dans lequel les branches du poste de préparation en forme de U (16) sont orientées parallèlement à l'allée de rayonnage (6), et sont reliées sur le côté opposé à l'allée de rayonnage (6) à un dispositif de manutention transversal formant la voie de manutention (19).
